# Europäisches Patentamt

# European Patent Office

# Office européen des brevets

(11) Veröffentlichungsnummer: **0 008 680**
A2

(12) **EUROPÄISCHE PATENTANMELDUNG**

(21) Anmeldenummer: 79102746.9

(22) Anmeldetag: 01.08.79

(51) Int. Cl.³: **F 24 J 3/04**
**F 01 K 17/00**

(30) Priorität: 02.09.78 DE 2838389

(43) Veröffentlichungstag der Anmeldung:
19.03.80 Patentblatt 80/6

(84) Benannte Vertragsstaaten:
CH FR GB NL SE

(71) Anmelder: CHEMISCHE WERKE HÜLS AG
- RSP Patente / PB 15 - Postfach 13 20
D-4370 Marl 1(DE)

(72) Erfinder: Schneider, August, Dr.
Flämingstrasse 13
D-4370 Marl(DE)

(72) Erfinder: König, Wolfgang, Dr.
Holtweg 19
D-4358 Haltern(DE)

(72) Erfinder: Eder, Roman
Pohlhoff 31
D-4281 Erle-Raesfeld(DE)

(54) Verfahren zur Erzeugung von Wärmeenergie durch Kombination der Kraft-Wärme-Kopplung mit der Wärmepumpe.

(57) Die Erfindung betrifft ein Verfahren zur Erzeugung von Wärmeenergie für Heizzwecke durch Kombination der Kraft-Wärme-Kopplung mit der Wärmepumpe. Der Kompressor der Wärmepumpe wird erfindungsgemäß von einer Gegendruck-Dampfturbine oder einem Dampfmotor direkt angetrieben. Die Wärmepumpe pumpt Wärme aus einer äußeren Wärmequelle mit niedriger Temperatur in den Heizkreislauf, danach wird die Wärmeenergie des Gegendruck-Dampfes über Wärmetauscher ebenfalls in den Heizkreislauf überführt. Das Verfahren ist unabhängig von der Art des Brennstoffs, vorzugsweise werden geringwertige Brennstoffe eingesetzt; es ermöglicht, Wärmeenergie für Heizzwecke auf wirtschaftliche, umweltfreundliche und brennstoffsparende Weise zu erzeugen. Mit dem Verfahren erreicht man einen Gesamtwirkungsgrad, der auch unter ungünstigen Verhältnissen deutlich über 100 % liegt. Das Verfahren ist bei sehr großen Leistungen anwendbar.

Fig.1

0008680

CHEMISCHE WERKE HÜLS AG     - 1 -                    O.Z. 3040
    - RSP PATENTE -

Verfahren zur Erzeugung von Wärmeenergie durch Kombination der Kraft-Wärme-Kopplung mit der Wärmepumpe

Die Erfindung betrifft ein Verfahren zur Erzeugung von Wärmeenergie für Heizzwecke durch Kombination der an sich bekannten optimal ausgelegten Kraft-Wärme-Kopplung mit der an sich bekannten Wärmepumpe.

Die vorliegende Erfindung verfolgt den Zweck, unter wesentlicher Benutzung des Wärmepumpen-Prinzips Heizwärme zu erzeugen, die zur Heizung von Gebäuden, Bädern und ähnlichen Einrichtungen, zur Bereitstellung von Brauchwasser und als Wärmequelle für chemische und technische Prozesse verwendet werden kann.

Bei dem thermodynamischen Prozeß der Kraft-Wärme-Kopplung wird sowohl kinetische Energie als auch nutzbare Wärmeenergie erzeugt, weil die Wärme des Gegendruckdampfes auf einem nutzbaren Temperaturniveau abgegeben wird. Der Wirkungsgrad der Kraft-Wärme-Kopplung beträgt etwa 90 %. Bei dem thermodynamischen Kondensationsprozeß dagegen wird nur kinetische Energie erzeugt, und der Dampf wird bis auf einen durch die Umgebungstemperatur bestimmten Druck entspannt. Der Wirkungsgrad des Kondensationsprozesses beträgt etwa 40 %.

Beide Wirkungsgrade sind die nach dem derzeitigen Stand der Technik maximal erreichbaren Wirkungsgrade.

0008680
O.Z. 3040

Mit einer Wärmepumpe wird Wärmeenergie aus einer beliebigen Wärmequelle, die eine für Heizzwecke nicht mehr ohne weiteres nutzbare Temperatur hat, auf eine nutzbare Temperatur angehoben. Die Leistungszahl einer Wärmepumpe ist dann besonders günstig, wenn die Temperaturdifferenz zwischen dem Verdampfer und dem Verflüssiger im Wärmepumpenkreislauf nicht zu groß ist. Als Wärmepumpen kommen Vorrichtungen mit Kompressor oder mit Absorber oder mit Dampfstrahler in Betracht.

Die Kompressions-Wärmepumpe wird mit einem Dieselmotor, einem Ottomotor, einer Gasturbine bzw. einem Elektromotor angetrieben.

Die Absorptions-Wärmepumpe wird mit Gas oder Öl bzw. elektrisch beheizt. Charakteristisch für diese Methoden ist der Einsatz relativ hochwertiger Energie (Erdölderivate, brennbare Gase bzw. elektrische Energie).

Die Wärmeerzeugung mittels Wärmepumpen wird bisher in einem nur geringen Umfang gewählt, gemessen an dem Gesamtverbrauch an Wärmeenergie. Auch die Wärmeleistung von Wärmepumpen-Anlagen ist bisher niedrig im Vergleich zur Wärmeleistung anderer Heizwerke.

In der Veröffentlichung von K. Kaiseršot (Brennst.-Wärme-Kraft 27, 1975, Seiten 219 bis 224) ist auf Seite 221 das Prinzipschaltbild für die Kombination einer Wärmepumpe mit einer Kondensations-Turbine angegeben. Der Verdampfer im Wärmepumpen-Kreislauf nimmt Wärme aus dem Kondensat des Dampf/Wasser-Kreislaufs auf. Wie Kaiseršot angibt, ist diese Schaltung einer unter vergleichbaren Bedingungen betriebenen Gegendruck- oder Entnahmekondensationsturbine jedoch deutlich unterlegen, da bei dieser Schaltung ein Brennstoffeinsatz notwendig ist, der um 20 % bis 50 % über dem Wert für die Erzeugung der gleichgroßen Wärmemenge ohne Wärmepumpe liegt.

Der Antrieb des Wärmepumpen-Kompressors durch eine Verbrennungskraftmaschine (Ottomotor, Dieselmotor, Gasturbine) oder durch einen Elektromotor ermöglicht zwar die annähernd vollständige Ausnutzung der gesamten Verbrennungswärme des Brennstoffs oder der Verlustwärme des Elektromotors, ist aber an hochwertige Energieträger gebunden.

Der vorliegenden Erfindung liegt die Aufgabe zugrunde, die Kraft-Wärme-Kopplung mit einer oder mehreren Wärmepumpen zu kombinieren, wobei die Wärmeenergie für Heizzwecke unabhängig von der Form des Brennstoffs auf wirtschaftliche, umweltfreundliche und brennstoffsparende Weise erzeugt werden soll, und zwar vorzugsweise bei Einsatz geringwertiger Energieträger, wie beispielsweise ballastreiche Steinkohle, Braunkohle, Abfälle, Müll und schweres Heizöl.

Die Aufgabe wird erfindungsgemäß gelöst durch den direkten Antrieb des Kompressors einer Kompressions-Wärmepumpe mittels einer Gegendruck-Dampfturbine oder einer Kolben-Dampfmaschine. Der Verdampfer des Wärmepumpen-Kreislaufs entzieht Wärme aus einer Wärmequelle auf einem für die Wärmeverwendung nicht mehr ohne weiteres nutzbaren Temperaturniveau (z. B. Flußwasser oder Umgebungsluft). Die über die Wärmepumpe in den Heizkreislauf eingespeiste Wärme entstammt überwiegend dieser Wärmequelle, wodurch die für die Heizung verfügbare Wärmeenergie größer wird als die bei der Verbrennung des eingesetzten Brennstoffs allein entstehende Wärmemenge.

Der Wärmeträger im Heizkreislauf - vorzugsweise Wasser - wird in zwei oder mehreren Stufen erwärmt durch den Wärmeträger in einem oder mehreren Wärmepumpen-Kreisläufen, durch den Abdampf der Gegendruck-Dampfturbine, durch Anzapf-Dampf aus der Turbine oder durch übergeströmten Dampf aus dem Dampferzeuger. Mindestens notwendig ist als erste Stufe die Erwärmung durch den Wärmeträger im Kreislauf der Kompressions-Wärmepumpe und als zweite Stufe die Erwärmung durch den Abdampf der Gegendruck-Dampfturbine.

Die zusätzliche Erwärmung durch übergeströmten Dampf ist möglich zwecks Abdeckung des Spitzenbedarfs im Heizkreislauf und bei Reparaturen im Bereich des Wärmepumpen-Kreislaufs. Die weitere Ausgestaltung des Verfahrens mit Absorptions- oder Dampfstrahl-Wärmepumpen, die mit Abdampf aus der Gegendruck-Turbine betrieben werden und deren Verdampfer durch eine Wärmequelle erwärmt wird, deren Wärme sonst nicht mehr nutzbar ist, erfolgt im Rahmen der Optimierung der Gesamtanlage.

Bei diesem erfindungsgemäßen Verfahren werden im wesentlichen Dampferzeuger und Gegendruck-Dampfturbinen in verschiedenen Ausführungen und Auslegungen sowie Turboverdichter großer Leistung im Wärmepumpen-Kreislauf eingesetzt.

Das erfindungsgemäße Verfahren hat folgende Vorteile:

- Die Brennstoffe können völlig frei gewählt werden. Für alle brennbaren Stoffe einschließlich der obengenannten geringwertigen Energieträger sind geeignete Dampferzeugerkonstruktionen bekannt, und zwar sowohl bei alleiniger Verwendung eines Energieträgers als auch bei Verwendung verschiedener Energieträger in einem Dampferzeuger. Auch die Kernenergie kann zur Dampferzeugung herangezogen werden.

- Die in den Heizkreislauf abgegebene Wärme ist wegen der Einschaltung der Wärmepumpe wesentlich größer als die gesamte im Brennstoff enthaltene Verbrennungsenergie, der Nutzungsgrad der Energie ist deutlich größer als 100 %.

- Das Verfahren ist anpassungsfähig an den naturgemäß unterschiedlichen Wärmebedarf in Heiznetzen zwischen Sommer und Winter.

- Das Verfahren arbeitet nach dem vorteilhaften Prinzip

0008680

o.Z. 3040

der Kraft-Wärme-Kopplung ohne zwangsweise Erzeugung elektrischer Energie; es ist im Grundsatz ausgelegt für die alleinige Erzeugung von Wärmeenergie für Heizzwecke und für chemische und technische Prozesse.

- Das Verfahren läßt wegen der mehrstufigen Erwärmung des Wärmeträgers im Heizkreislauf vielfältige Kombinationen zur Optimierung des Gesamtprozesses zu.

- Die eingesetzten Aggregate - Dampferzeuger, Dampfturbine und Turboverdichter einschließlich der zugehörigen Hilfseinrichtungen - haben einen Entwicklungsstand, der nachweislich einen Betrieb mit hoher Verfügbarkeit zuläßt.

- Das Verfahren ist bevorzugt anwendbar für Heizwerke mit relativ großer oder sehr großer Leistung.

Mit dem erfindungsgemäßen Verfahren können also sowohl das Vorurteil der in eine andere Richtung weisenden Veröffentlichung von Kaisersot als auch die Nachteile hinsichtlich der Begrenzung auf bestimmte Brennstoffe von mit Verbrennungskraftmaschinen angetriebenen Wärmepumpen überwunden werden.

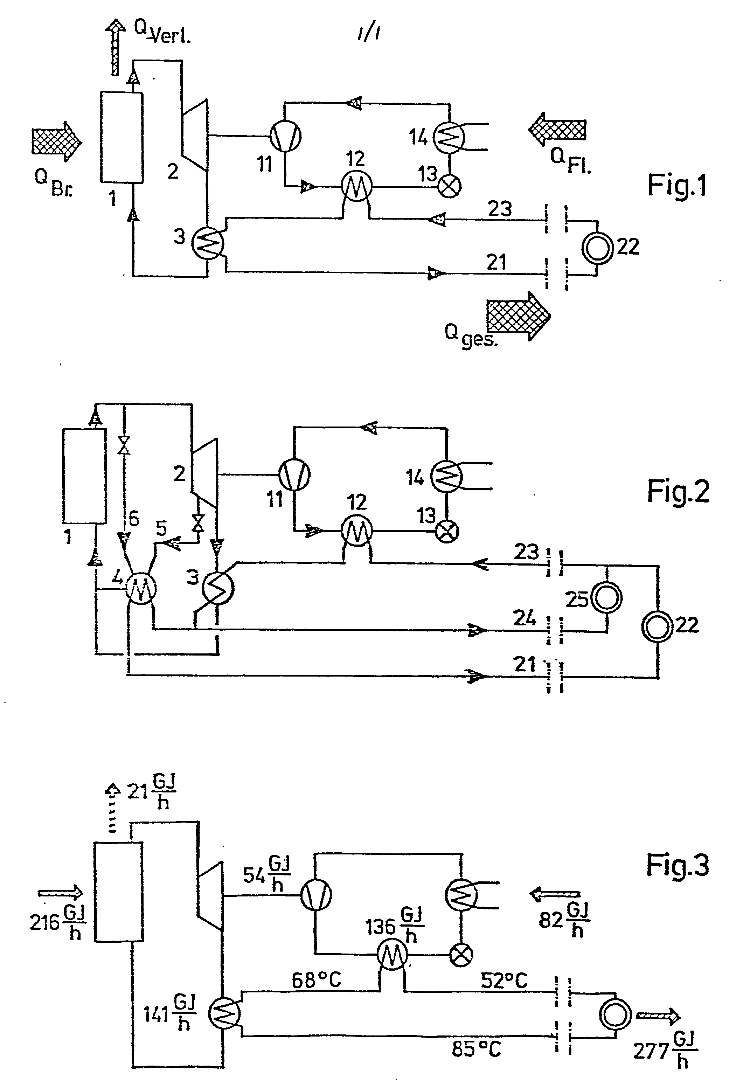

Die Prinzipschaltung der Kombination aus Kraft-Wärme-Kopplung mit Wärmepumpe ist in Figur 1 dargestellt. Diese besteht aus

dem Kraft-Wärme-Kopplungs-Kreislauf (Wasser/Dampf-Kreislauf),
dem Wärmepumpen-Kreislauf und
dem Heizkreislauf.

Der Dampferzeuger (1) ist wärmetechnisch optimal ausgelegt und an den oder die vorgelegten Brennstoffe angepaßt. In der Gegendruckturbine (2) wird ein Teil der Enthalpie des Dampfes in kinetische Energie an der Turbinenwelle umgesetzt; ein weiterer Teil der Dampfenthalpie wandert mit dem Gegendruckdampf in den Wärmetauscher (3) und von dort in den Heizkreislauf.

Bei der hier gezeigten Schaltung treibt die Turbine den Verdichter (11) im Wärmepumpen-Kreislauf. Der Wärmeträger im Wärmepumpen-Kreislauf strömt vom Verdichter durch den Verflüssiger (12), durch das Drosselorgan (13), durch den Verdampfer (14) und zurück zum Kompressor.

Das Heizwasser wird bei dieser Schaltung im Rücklauf (23) zweistufig erwärmt, und zwar in der ersten Stufe im Verflüssiger (12) des Wärmepumpen-Kreislaufs, in der zweiten Stufe durch den Gegendruckdampf im Wärmetauscher (3). Über die Vorlaufleitung (21) strömt das Heizwasser zum Verbraucher (22).

Der Dampferzeuger und die Gegendruckturbine mit ihren Nebenanlagen bilden den Kraft-Wärme-Kopplungs-Kreislauf. Die Turbine entnimmt diesem Kreislauf Wärme, die als kinetische Energie an der Turbinenwelle auftritt und über den Verdichter als Wärmeenergie in den Wärmepumpen-Kreislauf wandert. Mit Hilfe dieser Schaltung wird diese Energie entsprechend der Leistungszahl der Wärmepumpe vervielfacht.

Wegen der mindestens zweistufigen Erwärmung des Heizwassers kann die Temperaturdifferenz, mit der der Wärmepumpen-Prozeß betrieben wird, klein gehalten werden, wodurch eine günstige Leistungszahl erzielt wird.

Dem Heizwerk nach Figur 1 werden folgende Energien zugeführt:
die Verbrennungswärme $Q_{Br}$ des im Dampferzeuger (1) verbrannten Brennstoffs und die Wärme $Q_{Fl}$, die der Verdampfer (14) im Wärmepumpen-Kreislauf z. B. aus der Umgebungsluft oder aus Flußwasser entnimmt. Diese Wärme wandert zusätzlich zu der im Dampferzeuger durch Verbrennung umgewandelten Wärme in den Heizkreislauf.

Nach Abzug der Wärmeverluste $Q_{Verl}$ im Wasser/Dampf-Kreislauf ist damit bei diesem Heizwerk der Nutzungsgrad der Primärenergie größer als 1; dieser Nutzungsgrad ist definiert als Verhältnis der im Heizkreislauf nutzbaren Wärmeenergie $Q_{ges}$ zu der Verbrennungswärme $Q_{Br}$ des dem Dampferzeuger zugeführten Brennstoffs. Diese erfindungsgemäße Schaltung ist damit eine wärmetechnisch sehr günstige Alternative zum bisher bekannten Heizwerk.

In Figur 2 sind einige Schaltungsvarianten für die Kombination der Kraft-Wärme-Kopplung mit der Wärmepumpe angegeben. Der Heizkreislauf kann als Dreileitersystem ausgeführt werden. Dabei ist ein Vorlaufstrang (21) für die Gebäudeheizung (22) vorgesehen; in diesem Strang wird die Vorlauftemperatur im jahreszeitlichen Wechsel stark unterschiedlich eingestellt. Der zweite Vorlaufstrang (24) führt Brauchwasser zum Ort des Brauchwasserbedarfs (25); die Temperatur in diesem Strang wird unabhängig von der Jahreszeit annähernd konstant gehalten. Beide Vorlaufstränge haben einen gemeinsamen Rücklauf (23).

Auch bei dieser Schaltung wird der Rücklauf des Heizwassers zuerst im Wärmepumpen-Kreislauf unter wesentlicher Beteiligung der Wärmeenergie $Q_{F1}$ erwärmt. Anschließend wird es in einer oder mehreren Stufen auf die gewünschte Temperatur gebracht, wobei in diesen Stufen die Wärme dem Wasser/Dampf-Kreislauf entzogen wird.

Bei Überlastung des Heizkreislaufs im Winter oder in Störungsfällen kann das Heizwasser zusätzlich im Wärmetauscher (4) durch übergeströmten Dampf erwärmt werden, der über die Anzapfung (5) aus der Turbine oder über die Leitung (6) direkt aus dem Dampferzeuger entnommen werden kann.

Figur 3 zeigt als Beispiel die Ergebnisse einer quantitativen Berechnung für die Schaltung nach Figur 1, wobei folgende Voraussetzungen gemacht wurden:

- Frischdampfzustand hinter dem Dampferzeuger 100 bar bei 550 $^{\circ}$C
- Dampferzeugerwirkungsgrad 90 %
- Turbinenwirkungsgrad 71 % wegen des sich ändernden Gegendrucks und des überwiegenden Teillastbetriebs
- reale Leistungszahl der Wärmepumpe 50 % der Carnotschen Leistungszahl
- Flachlandfluß als Wärmequelle auf niedrigem Temperaturniveau (9 $^{\circ}$C)
- Heizwasser mit 2 000 t/h Umwälzmenge, 85 $^{\circ}$C Vorlauf und 52 $^{\circ}$C Rücklauf (Heizbetrieb an einem Wintertag).

Im Dampferzeuger werden $Q_{Br}$ = 216 GJ/h durch Verbrennung umgewandelt, die Wärmeverluste werden mit $Q_{Verl}$ = 21 GJ/h angenommen. Die Turbine entnimmt dem Wasser/Dampf-Kreislauf 54 GJ/h, die als kinetische Energie am Verdichter ansteht und als Wärme in den Wärmepumpen-Kreislauf wandert. Der Wärmequelle auf niedrigem Temperaturniveau werden im Verdampfer des Wärmepumpen-Kreislaufs $Q_{F1}$ = 82 GJ/h entzogen. Der Verflüssiger des Wärmepumpen-Kreislaufs gibt damit insgesamt 136 GJ/h an den Heizkreislauf ab, wodurch das Heizwasser von 52 $^{\circ}$C auf 68 $^{\circ}$C erwärmt wird. Die Enthalpie des Dampfes wird im Wärmetauscher des Wasser/Dampf-Kreislaufs um 141 GJ/h erniedrigt, diese Energie erwärmt das Heizwasser weiter auf 85 $^{\circ}$C.

Für die Wärmeverbraucher stehen also $Q_{ges}$ = 277 GJ/h zur Verfügung, obwohl in den Dampferzeuger nur $Q_{Br}$ = 216 GJ/h eingespeist werden. In diesem Falle beträgt der Nutzungsgrad der Energie also 128 %.

Wie die Rechnung für weitere Betriebspunkte zeigt, steigt z. B. für das Schaltungsbeispiel nach Figur 1 der Nutzungsgrad der Energie in der wärmeren Jahreszeit an und erreicht etwa 150 %.

Auch wenn zur kältesten Jahreszeit die Rücklauftemperatur des Heizwassers bei 65 $^{\circ}$C und die Vorlauftemperatur bei

0008680

120 °C liegt, beträgt der Nutzungsgrad der Energie immer noch 105 bis 110 %.

Will man gemäß dem Zahlenbeispiel nach Figur 3 die Wärmeenergie von 277 GJ/h mit einem Heizwerk ohne Wärmepumpe bereitstellen, dann müssen im Dampferzeuger dieses konventionellen Heizwerkes unter Zuschlag von 11 % für Wärmeverluste also 308 GJ/h durch Verbrennung erzeugt werden. Das konventionelle Heizwerk benötigt also für die im Beispiel nach Figur 3 bereitgestellte Heizwärme das 1,42-fache der Primärenergie, die für die Kombination von Kraft-Wärme-Kopplung mit Wärmepumpe notwendig ist.

0008680

o.Z. 3040

Patentansprüche:

1. Verfahren zur Erzeugung von Wärmeenergie für Heizzwecke durch Kombination der Kraft-Wärme-Kopplung mit der Wärmepumpe,
   gekennzeichnet durch
   
   a) den unmittelbaren Antrieb des an sich bekannten Kompressors der Kompressions-Wärmepumpe durch eine an sich bekannte Gegendruck-Dampfturbine oder eine an sich bekannte Kolbendampfmaschine,
   
   und b) die Zuführung von Wärme zu dem Wärmeträger des Wärmepumpen-Kreislaufs aus einer Wärmequelle auf einem für die direkte Wärmeverwendung nicht mehr nutzbaren Temperaturniveau.

2. Verfahren nach Anspruch 1,
   gekennzeichnet durch
   die zwei- oder mehrstufige Erwärmung des Wärmeträgers im Heizkreislauf durch den Wärmeträger in einem oder mehreren Wärmepumpen-Kreisläufen und/oder durch den Abdampf der Gegendruckdampfturbine und/oder durch Dampf aus einer Anzapfung der Turbine und/oder durch übergeströmten Frischdampf.

3. Verfahren nach Anspruch 2,
   gekennzeichnet durch
   die Verwendung des Gegendruckdampfes der Gegendruckturbine zum Betrieb einer Absorptions- und/oder Dampfstrahl-Wärmepumpe.

Fig.1

Fig.2

Fig.3